# EUROPEAN PATENT SPECIFICATION

(11) **EP 2 517 820 B1**
(45) Date of publication and mention of the grant of the patent: **30.03.2016**
(21) Application number: 12164650.9
(22) Date of filing: 18.04.2012
(51) Int. Cl.: B23K 37/04, B23K 37/053

(54) **Method and auxiliary device for precision positioning of welded type nozzles**
Verfahren und Hilfsvorrichtung zur präzisen Positionierung von geschweißten Düsen
Procédé et dispositif auxiliaire pour positionner avec précision des buses de type soudé

(30) Priority: 28.04.2011 TW 100114767
(43) Date of publication of application: 31.10.2012
(73) Proprietor: China Steel Corporation, Kaohsiung 81233 (TW)
(72) Inventor: Tung, Kun-Cheng, 81233 Hsiao Kang, Kaohsiung (TW); Li, Kin-Tse, 81233 Hsiao Kang, Kaohsiung (TW); Huang, Ming-Hsien, 81233 Hsiao Kang, Kaohsiung (TW); Chen, Meng-Fu, 81233 Hsiao Kang, Kaohsiung (TW)
(74) Representative: 2K Patentanwälte Blasberg Kewitz & Reichel

(56) References cited:
- US-A- 5 098 006
- US-A1- 2003 201 302

## Description

### BACKGROUND OF THE INVENTION

### 1. Field of the Invention

The present invention generally relates to a method for positioning an element during welding, and more particularly to a method for precision positioning of welded type nozzles during welding and to a method for connecting a plurality of welded type nozzles with a main pipe header.

### 2. Description of the Related Art

Although different types of nozzles provide spray pattern in different shapes such as a sectorial, circular, elliptical, square or rectangular shape, the angle, shape and size of the spray pattern depend on the geometric positions of the nozzles. When a plurality of nozzles is arranged on the same header, each nozzle must be positioned at a proper and correct geometric position, in order to avoid interference between the spray patterns or adverse effect.

A nozzle can generally be connected with a main pipe header by thread engagement or welding. Though relatively inexpensive to manufacture, threaded type nozzles are most often for low working pressure applications. Moreover, if a certain offset angle exists between adjacent nozzles, the installation and positioning process becomes difficult and time-consuming. Though relatively expensive, welded type nozzles can be conveniently and rapidly installed, removed or replaced. The correct positioned welded type nozzles are ensured always in the same spray configuration after nozzle replacement, and can be used in high working pressure applications, for example, common and important applications in hot-rolled steel strip plants, such as highpressure descaling, roll cooling, and steel strip surface cooling and cleaning.

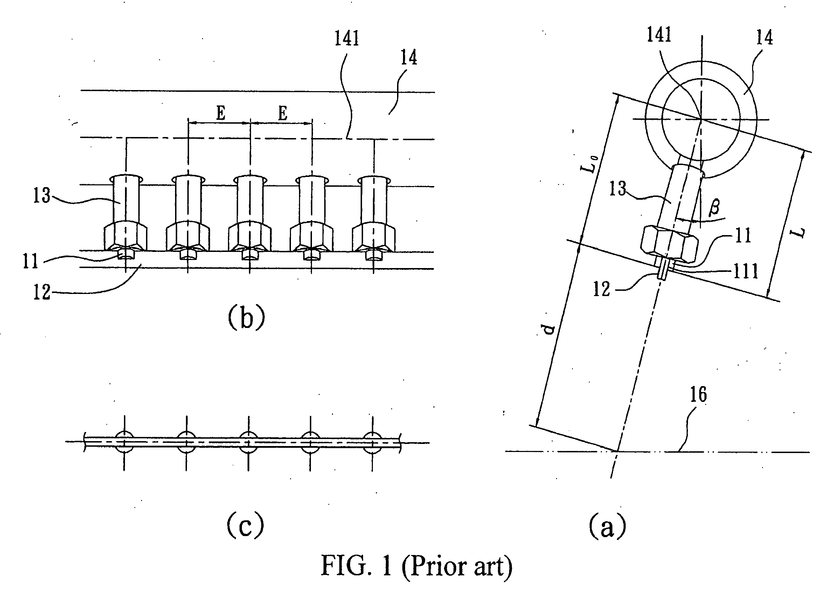

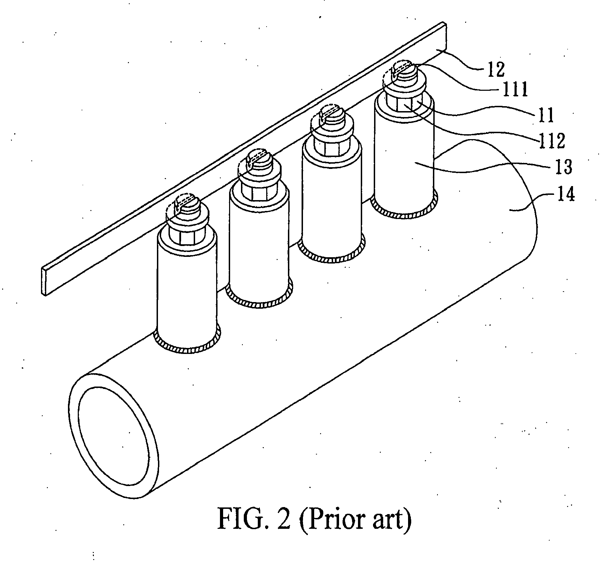

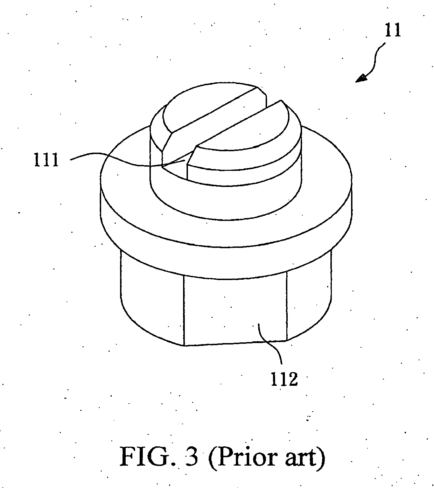

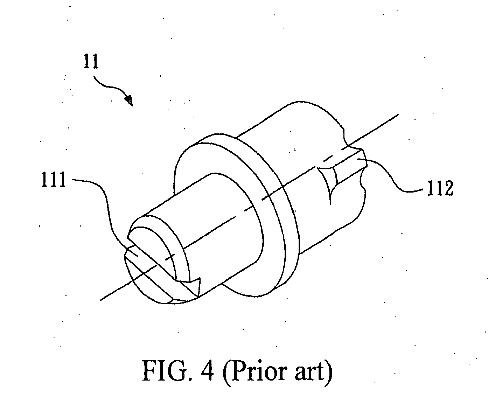

FIGS. 1-2 are schematic views illustrating prior art examples of performing a nozzle positioning during welding by using an alignment tip and an alignment plate; FIG. 3 is a schematic view of a conventional alignment tip. Referring to FIGS. 1-3, the alignment tip 11 has a groove 111 and a positioning structure 112 on an outer surface thereof. The positioning structure 112 may be a positioning flat surface (as shown in FIG. 3) or positioning key (as shown in FIG. 4); the positioning key may also be a dovetail key (for small size cooling nozzles), but is not limited thereto, and the alignment tip 11 has the same external dimension as a nozzle tip.

A specific included angle exists between the groove 111 and the positioning structure 112, and the positioning structure 112 of the alignment tip 11 cooperates with a positioning structure (not shown in the drawings) located on an inner surface of a welding adapter 13, so that when a alignment plate 12 is used to correct the groove 111 of the alignment tip 11 to a parallel position, the positioning structures of all the welding adapters 13 are also rotated to the same specific angle accordingly.

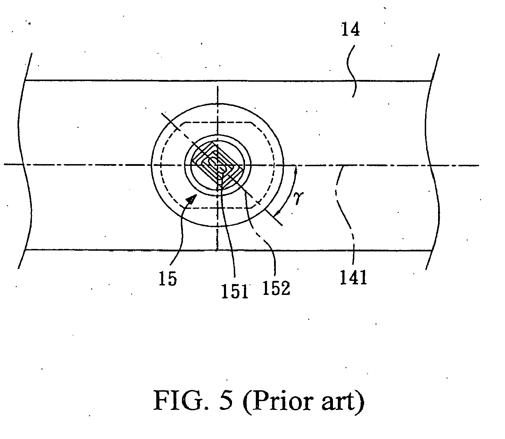

Referring to FIGS. 1-5, since the external dimension of the alignment tip 11 are the same as the nozzle tip 15, after the welding adapter 13 and the main pipe header 14 are welded and the nozzle tip 15 is mounted, a distance between the alignment tip 11 and a center line 141 of the main pipe header 14 in a longitudinal direction is approximately equal to a length L₀ of an assembled nozzle after a nozzle tip is combined with the corresponding welding adapter 13, the length L₀ of the assembled nozzle is a distance between the nozzle tip and a center line 141 of a main pipe header 14 in a longitudinal direction, and the alignment tip 11 and the nozzle tip 15 have the same external dimension, so that a correction distance L of the conventional positioning device is equivalent to the length L₀ of the assembled nozzle, and a long-diameter center line 152 of a spray orifice 151 of the nozzle tip 15 forms a required offset angle γ (as shown in FIG. 5) with the center line 141 of the main pipe header 14 in the longitudinal direction. The alignment tip 11 can correct different offset angles according to different offset angle designs as required.

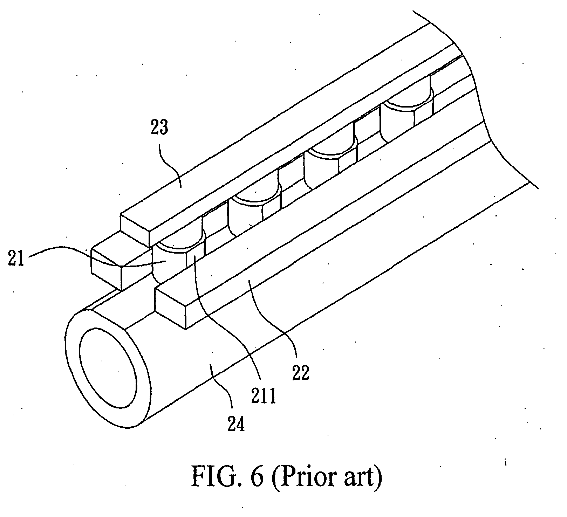

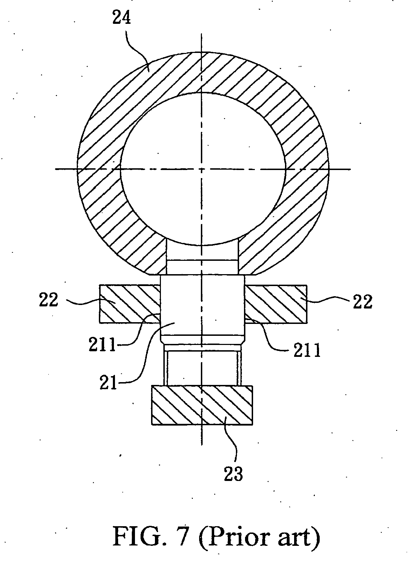

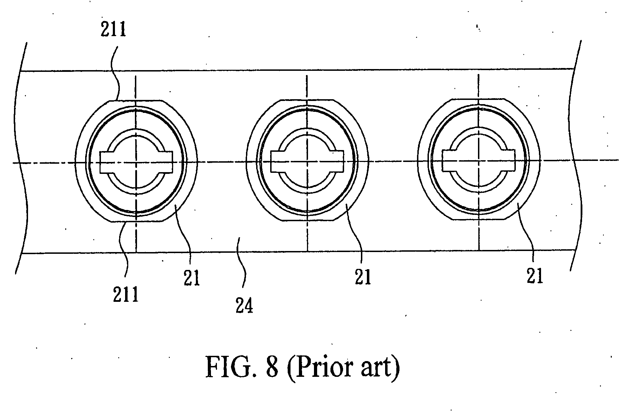

FIG. 6 is another schematic view of nozzle positioning by using an alignment plate during welding in the prior art; FIG. 7 is a schematic cross-sectional view taken along a radial direction of a main pipe header shown in FIG. 6; FIG. 8 is a top view of FIG. 6 after the alignment plate is removed. Referring to FIGS. 6-8, in the conventional welding positioning method, two processed positioning flat surfaces 211 are designed on an outer diameter of a welding adapter 21, and during welding, by using the two positioning flat surfaces 211 of each welding adapter 21 and a first alignment plate 22, the positioning flat surfaces 211 on two sides of each welding adapter 21 can be aligned, and top surfaces of all the welding adapters 21 are positioned at the same horizontal position by using a second alignment plate 23. The positioning flat surface 211 of the welding adapter 21 is parallel to or forms a certain included angle with a center line of a nozzle tip positioning slot inside the welding adapter 21, so that after the welding adapter 21 and a main pipe header 24 are welded, positioning at a required offset angle can be achieved.

Such a conventional method is disadvantageous in that the machining thickness of the two positioning flat surfaces 211 needs to be taken into consideration, and accordingly, the wall thickness of the welding adapter 21 is thicker than ordinary ones. Therefore, such a conventional method is generally used for positioning of descaling nozzles, and seldom used for positioning of small size cooling nozzles.

The above two conventional welded nozzle positioning methods facilitate positioning of the offset angle or length of the assembled nozzle, but cannot correct positioning for an error in nozzle pitch, an error in parallelism of nozzles or an angle error in lead angle between nozzles (included angle between a center line of the nozzle and a normal line of a working piece surface).

The angle error in lead angle between nozzles is described below by way of example. Assuming that a predetermined lead angle is 15±1°, the lead angles of different nozzles can shift by 1° in different direction, and accordingly the angle error in lead angle between nozzles can reach 2°.

As the positioning accuracy of the conventional nozzle positioning method is insufficient, and due to manufacturing tolerance and assembly tolerance of the nozzle as well as deformation of the welding adapter after welding, there is an error in geometric position of the nozzle after welding and assembly. Such an error in geometric position can be extended and amplified as the spray distance of the nozzle increases (the larger the spray distance is, the larger the error in geometric position is). The correction position of the conventional nozzle positioning method is located nearby the outlet of the nozzle tip. A position error in impact area of spray pattern on the working piece surface can be extended and amplified as the spray distance increases; as the spray distance may be several times the length of the nozzle after welding and assembly, the geometric error at the outlet of the nozzle can be amplified several times according to the spray distance, which is the greatest inevitable disadvantage of the conventional nozzle positioning method.

US 2003/201302 A discloses an automated header brazing machine for determining the location of junction tubes along a header and automatically brazing them to the header and represents the closest prior art. Particularly, US 2003/201302 A discloses an auxiliary device suitable for precision positioning of welded type nozzles, for cooperating with a plurality of welding adapters, wherein the welding adapters are used for being connected to a main pipe header and receiving a plurality of nozzle tips, the auxiliary device comprising: a plurality of alignment tips, wherein each alignment tip has a first end and a second end opposite to each other, each first end is away from the corresponding welding adapter and has a first positioning portion, and each second end is fixed to the corresponding welding adapter; and an alignment bar, having a plurality of second positioning portions, wherein structures of the second positioning portions cooperate with structures of the first positioning portions of the alignment tips, the alignment bar is combined with the alignment tips so that the first positioning portions of the alignment tips are aligned with the second positioning portions of the alignment bar, so as to precision position the nozzles. However, a correction distance in the sense of claim 1, after a nozzle tip is combined with the corresponding welding adapter, is not discloses.

US 5 098 006 A discloses an auxiliary device suitable for precision positioning of welded type nozzles similar to that disclosed by US 2003/201302 A. However, a correction distance in the sense of claim 1, after a nozzle tip is combined with the corresponding welding adapter, is not discloses.

### SUMMARY OF THE INVENTION

It is an object of the present invention to provide an enhanced method for precision positioning of welded type nozzles in a main pipe header in a convenient and more precise manner. It is a further object of the present invention to provide an enhanced method for connecting a plurality of welded type nozzles with a main pipe header using such an enhanced method for precision positioning of welded type nozzles.

This object is solved by device method for precision positioning of welded type nozzles in a main pipe header according to claim 1 and by a method for connecting a plurality of welded type nozzles with a main pipe header according to claim 6. Further advantageous embodiments are the subject-matter of the dependent claims.

Thus the present invention provides a method for precision positioning of welded type nozzles in a main pipe header, wherein each nozzle has a welding adapter and a nozzle tip, the method comprises the steps of: (a) combining a plurality of alignment tips with corresponding welding adapters, wherein each alignment tip has a first end and a second end opposite to each other, each first end is away from the corresponding welding adapter and has a first positioning portion, and each second end is fixed to the corresponding welding adapter; and (b) combining an alignment bar with the alignment tips, so that the first positioning portions of the alignment tips are aligned with a plurality of second positioning portions of the alignment bar, so as to precision position geometric positions of the nozzles, wherein structures of the second positioning portions cooperate with structures of the first positioning portions of the alignment tips, and after the alignment bar is combined with the alignment tips, a correction distance between an end surface of the alignment bar and a center line of the main pipe header in a longitudinal direction is larger than a length of an assembled nozzle after a nozzle tip is combined with the corresponding welding adapter, and the length of the assembled nozzle is a distance between the nozzle tip and the center line of the main pipe header in the longitudinal direction.

By using the method for precision positioning of welded type nozzles of the present invention, the alignment tip and the alignment bar can be applied in cooperation during the process of welding the welding adapters of the nozzles and the main pipe header, so that errors in the geometric positions of the nozzles, for example, an error in nozzle pitch, an error in parallelism of nozzles and an angle error in included angle between the center line of the nozzle and the normal line of the working piece surface, can be accurately corrected. In addition, the correction position is close to the impact area of the spray pattern on the working piece surface, so that the extensible error generated by the conventional method can be reduced or avoided, thereby greatly improving the accuracy of the geometric position of the spray pattern of the nozzle.

Other features and advantages of the present invention will become more apparent from the detailed descriptions given below with reference to the accompanying drawings.

### BRIEF DESCRIPTION OF THE DRAWINGS

- FIGS. 1-2: are schematic views illustrating prior art examples of performing a nozzle positioning during welding by using an alignment tip and an alignment plate;
- FIG. 3: is a schematic view of a conventional alignment tip;
- FIG. 4: is a schematic view of another conventional alignment tip;
- FIG. 5: is a schematic view of a conventional nozzle after positioning;
- FIG. 6: is another schematic view of nozzle positioning by using an alignment plate during welding in the prior art;
- FIG. 7: is a schematic cross-sectional view taken along a radial direction of a main pipe header shown in FIG. 6;
- FIG. 8: is a top view of FIG. 6 after the alignment plate is removed;
- FIG. 9: is a schematic view of a first embodiment of nozzle positioning according to the present invention by using an auxiliary device for precision positioning of welded type nozzles;
- FIG. 10: is a partially enlarged view of part G in FIG. 9;
- FIG. 11: is an A-A view of FIG. 9;
- FIG. 12: is a B-B view of FIG. 9;
- FIGS. 13-15: are schematic views of performing a nozzle positioning while first and second positioning portions of an auxiliary device for precision positioning of welded type nozzles are a key and a slot, respectively;
- FIGS. 16-17: are schematic views illustrating two different positioning structures of the alignment tip for use in a method for precision positioning according to the present invention;
- FIGS. 18-22: are schematic views illustrating different correction manners of an offset angle of the nozzle according to the present invention;
- FIGS. 23-25: are schematic views of performing the precision positioning of welded type nozzles according to the present invention by using an alignment bar and an alignment plate of the auxiliary device for precision positioning of welded type nozzle;
- FIG. 26: is a schematic view of another embodiment of performing the nozzle positioning during welding according to the present invention by using the auxiliary device for precision positioning of welded type nozzles;
- FIG. 27: is a partially enlarged view of part I in FIG. 26;
- FIG. 28: is an E-E view of FIG. 26; and
- FIG. 29: is a flowchart of a method for precision positioning of welded type nozzles according to the present invention.

### DETAILED DESCRIPTION OF THE INVENTION

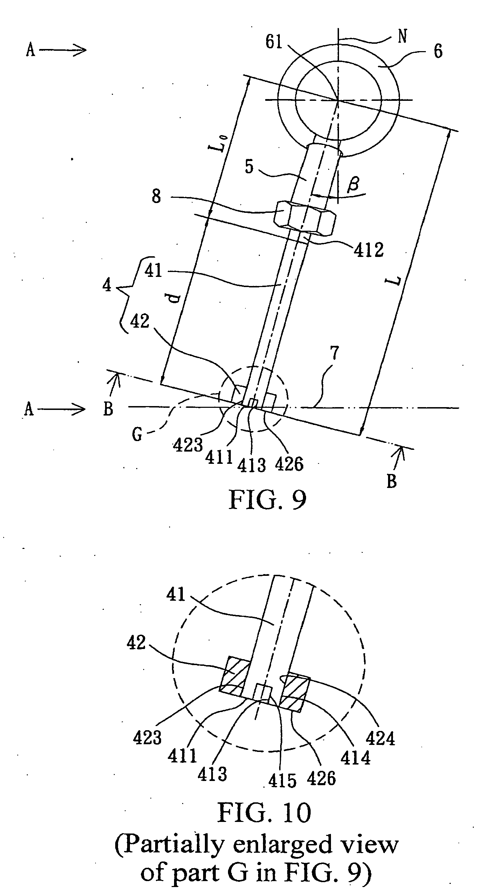

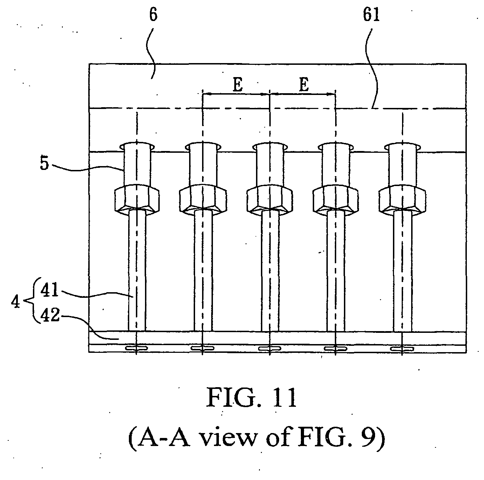

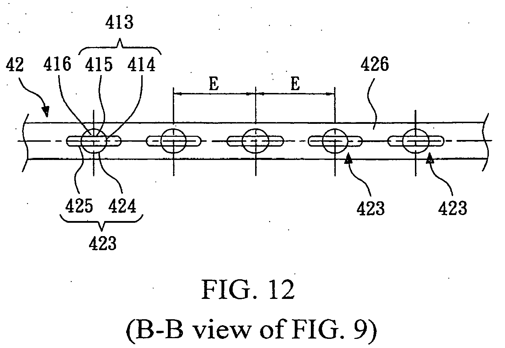

Referring to FIGS. 9-12, the auxiliary device 4 for precision positioning of welded type nozzles for use in a method according to the present invention is used for cooperating with a plurality of welding adapters 5, the welding adapters 5 are used for being connected to a main pipe header 6 and receiving a plurality of nozzle tips, a nozzle pitch E exists between adjacent nozzles to be positioned, and in this embodiment, the nozzle pitch E is a pitch between adjacent welding adapters 5.

The auxiliary device 4 for precision positioning of welded type nozzles includes a plurality of alignment tips 41 and an alignment bar 42. Each alignment tip 41 has a first end 411 and a second end 412 opposite to each other, each first end 411 is away from the corresponding welding adapter 5 and has a first positioning portion 413, and each second end 412 is fixed to the corresponding welding adapter 5. The second end 412 of the alignment tip 41 has the same external dimension as the nozzle tip.

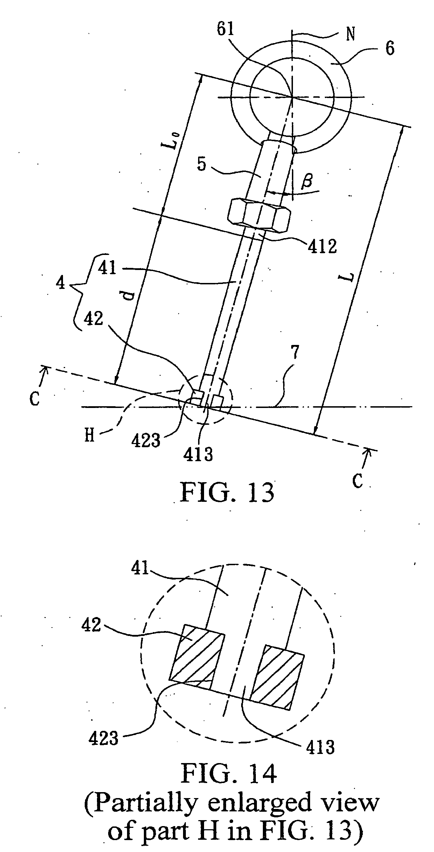

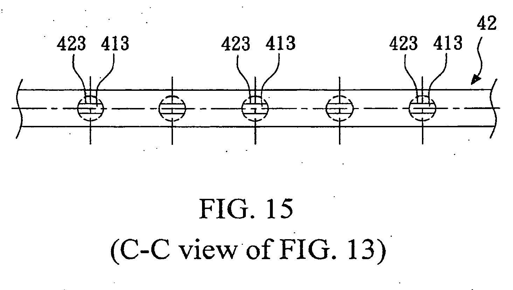

The alignment bar 42 has a plurality of second positioning portions 423, and structures of the second positioning portions 423 cooperate with structures of first positioning portions 413 of the alignment tips 41. The first positioning portion 413 and the second positioning portion 423 may be a slot and key combination, for example, a combination of a slot with a slot, a combination of a slot with a key, or a combination of a key with a slot. For example, the first positioning portions 413 have key slots 415, and the second positioning portions 423 have key slots 425 (as shown in FIGS. 9-12); or the first positioning portions 413 have keys, and the second positioning portions 423 have slots (as shown in FIGS. 13-15).

In this embodiment, each first positioning portion 413 has a circular shaft 414 and a key slot 415, each second positioning portion 423 includes a circular hole 424 and key slots 425 on two sides of the circular hole 424, a fit tolerance of the circular hole 424 of each second positioning portion 423 preferably cooperates with an outer diameter of the circular shaft 414 of the corresponding alignment tip 41 (preferably, a proper clearance exists), and at least the width of the key slot 425 of each second positioning portion 423 cooperates with the width of the key slot 415 of each first positioning portion 413 (for example, the widths are the same).

A positioning pitch identical to the nozzle pitch E exists between the second positioning portions 423. The alignment bar 42 is combined with the alignment tips 41, so that the circular shafts 414 and the key slots 415 of the first positioning portions 413 are aligned with the circular holes 424 and the key slots 425 of the second positioning portions 423.

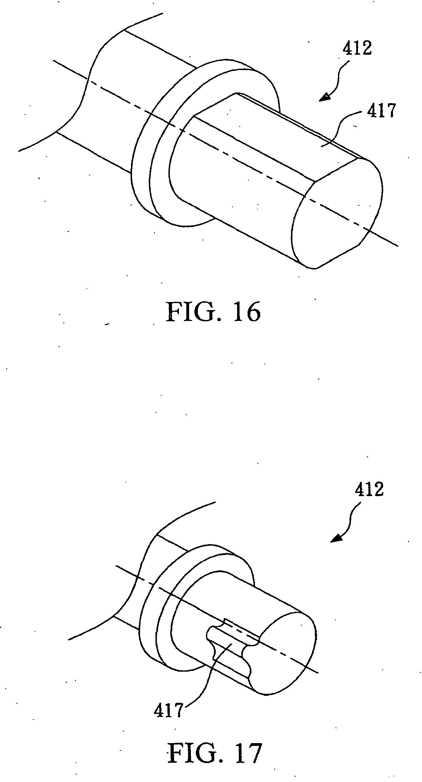

An outer shape of the second end 412 of each alignment tip 41 has a first positioning structure 417, the first positioning structure 417 may be a positioning flat surface (as shown in FIG. 16) or positioning key (as shown in FIG. 17), the positioning key may be a dovetail key (for small size cooling nozzles), but is not limited thereto, and the positioning key may be a positioning structure of any nozzle and welding adapter. The first positioning structures 417 of the alignment tips 41 cooperate with a second positioning structure (not shown in the drawings) on an inner surface of each welding adapter 5. The second end 412 of each alignment tip 41 is inserted into the corresponding welding adapter 5, and then locked to the corresponding welding adapter 5 by using a nut 8, so as to fix the alignment tips 41.

The cooperation between the first positioning structures 417 of the alignment tips 41 and the second positioning structure of each welding adapter 5 is described below by way of example.

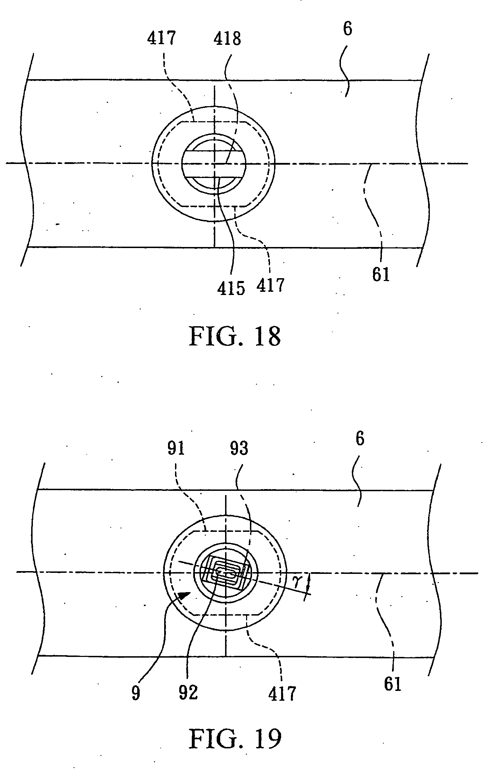

The first positioning structure 417 is parallel to a long-diameter center line 418 of the key slot 415 of the first positioning portion 413, and when the alignment bar 42 is used to adjust and position the alignment tip 41 so that the long-diameter center line 418 of the key slot 415 of the first positioning portion 413 is parallel to a center line 61 of the main pipe header 6 in a longitudinal direction (as shown in FIG. 18), the second positioning structure of each welding adapter 5 is also parallel to the center line 61 of the main pipe header 6 in the longitudinal direction. When a set offset angle γ (for example, 10° or 15°) exists between a positioning structure 91 of a used nozzle tip 9 and a long-diameter center line 93 of a spray orifice 92 of the nozzle tip 9, the nozzle has the offset angle γ (as shown in FIG. 19) after the nozzle tip 9 is assembled to the welding adapter 5.

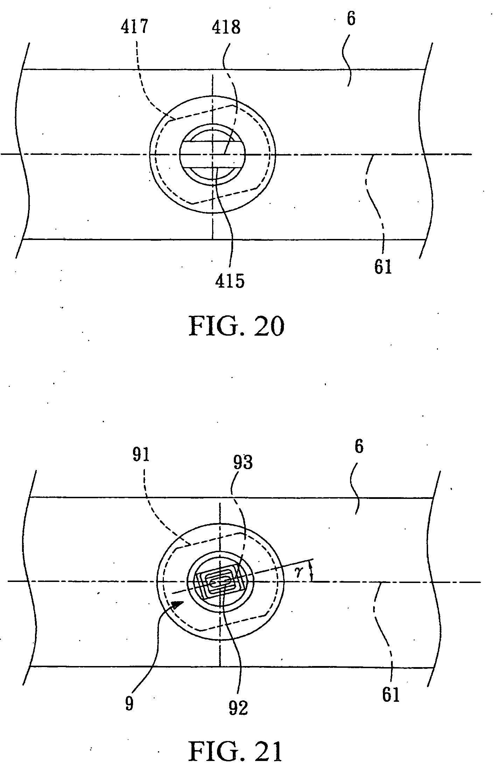

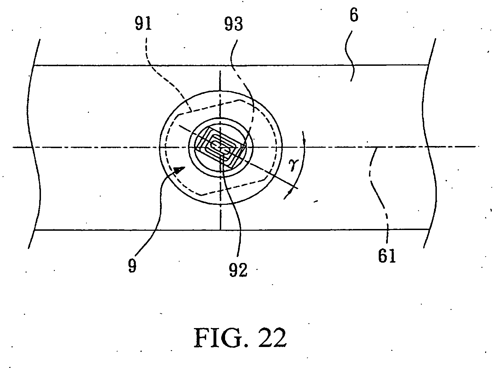

It should be understood that an included angle can exist between the first positioning structure 417 and the long-diameter center line 418 of the key slot 415 of the first positioning portion 413, and when the alignment bar 42 is used to adjust and position the alignment tip 41 so that the long-diameter center line 418 of the key slot 415 of the first positioning portion 413 is parallel to the center line 61 of the main pipe header 6 in the longitudinal direction, an included angle exists between the second positioning structure of each welding adapter 5 and the center line 61 of the main pipe header 6 in the longitudinal direction (as shown in FIG. 20). The positioning structure 91 of the used nozzle tip 9 may be parallel to (as shown in FIG. 21) or form a presetting angle with (as shown in FIG. 22) the long-diameter center line 93 of the spray orifice 92, and through the cooperation of the included angle and the presetting angle, the offset angle γ of the nozzle after the nozzle tip 9 is assembled to the welding adapter 5 can be defined.

For example, the included angle between the first positioning structure 417 and the long-diameter center line 418 of the key slot 415 of the first positioning portion 413 is 15°, and after the long-diameter center line 418 of the key slot 415 of the first positioning portion 413 is adjusted to be parallel to the center line 61 of the main pipe header 6 in the longitudinal direction, the second positioning structure of each welding adapter 5 also forms an included angle of 15° with the center line 61 of the main pipe header 6 in the longitudinal direction (anticlockwise). If the positioning structure 91 of the nozzle tip 9 is parallel to the long-diameter center line 93 of the spray orifice 92, the offset angle γ of the nozzle is 15° (as shown in FIG. 21) after the nozzle tip 9 is assembled to the welding adapter 5; and if the positioning structure 91 of the nozzle tip 9 forms a set angle of 30° (anticlockwise) with the long-diameter center line 93 of the spray orifice 92, the offset angle γ of the nozzle is -15° (clockwise) (as shown in FIG. 22) after the nozzle tip 9 is assembled to the welding adapter 5.

After the alignment bar 42 is combined with the alignment tips 41, a correction distance L between an end surface 426 of the alignment bar 42 and the center line 61 of the main pipe header 6 in the longitudinal direction is larger than a length L₀ of an assembled nozzle after a nozzle tip is combined with the corresponding welding adapter 5, and the length L₀ of the assembled nozzle is a distance between the nozzle tip and the center line 61 of the main pipe header 6 in the longitudinal direction. A spray distance between the nozzle and a working piece surface 7 is d, and a relation between L, L₀ and d is that:
when d≤200 mm, L₀<L<L₀+500 mm; and
when d>200 mm, L₀<L<L₀+3d.

The method for precision positioning of welded type nozzles of the present invention is described below by way of example, but the present invention is not limited thereto. First, the alignment bar 42 is used to position two alignment tips 41 (for example, leftmost and rightmost alignment tips 41) or three alignment tips 41 (for example, leftmost, rightmost and intermediate alignment tips 41), where in this embodiment, first, the leftmost and rightmost alignment tips 41 are positioned, and then the circular hole 424 of the second positioning portion 423 is sleeved over the circular shaft 414 of the first positioning portion 413 of the corresponding alignment tip 41, and afterwards, the leftmost and rightmost alignment tips 41 are adjusted so that the key slots 415 of the first positioning portions 413 thereof are aligned with the key slots 425 of the corresponding second positioning portions 423, and at the same time the alignment bar 42 is adjusted so that an end surface 426 thereof is parallel to and aligned with end surfaces 416 of the first ends 411 of the two alignment tips 41.

Next, the alignment bar 42 and the two alignment tips 41 can be fixed at side surfaces of the two alignment tips 41 by lateral screw fixation (but the present invention is not limited to this fixation manner), and then the geometric positions of the other alignment tips 41 are adjusted and aligned in the above manner according to the corresponding first positioning portions 413 and second positioning portions 423. After all the alignment tips 41 are corrected, the welding adapters 5 and the main pipe header 6 are connected by welding. It should be understood that the method for precision positioning of welded type nozzles of the present invention can correct a part of the alignment tips 41 or all of the alignment tips 41 at one time.

The alignment bar 42 and the alignment tip 41 of the present invention are corrected at positions close to the working piece surface 7, so that the clearance between the first positioning portion 413 of the alignment tip 41 and the second positioning portion 423 of the alignment bar 42 is just a position error in impact area of spray pattern on the working piece surface 7, no extensible error that can be extended and amplified due to the spray distance exists, and therefore, almost no angle error exists. For example, the clearance between the first positioning portion 413 of the alignment tip 41 and the second positioning portion 423 of the alignment bar 42 of the present invention and a maximum position error after assembly are 1 mm, and accordingly the maximum position error in spray area between adjacent nozzles after correction is also about 1 mm.

In contrast, in the conventional welded nozzle positioning method, as the correction position is located nearby the exit of the nozzle tip and is spaced from the working piece surface by a spray distance, the angle error needs to be taken into consideration in addition to the position and assembly errors. A position error in impact area of spray pattern can be extended and amplified as the spray distance increases, and as the spray distance may be several times the length of the nozzle after welding and assembly, the position error at the outlet of the nozzle can be amplified several times on the working piece surface. For example, if the clearance between the alignment tip and the alignment plate and a maximum position error after assembly are 1 mm, the error can be amplified several times as the spray distance extends.

Compared with the conventional welded nozzle positioning method, the method according to the present invention not only can greatly reduce the angle error in lead angle between nozzles, but also can greatly reduce the extensible position error in impact area of spray pattern.

In addition, through the cooperation of the key slot 415 of the first positioning portion 413 and the key slots 425 of the second positioning portion 423 (or through the cooperation of the key slot and the slot as shown in FIGS. 13-15), the offset angle of the nozzle can be corrected. Through the cooperation of the end surface 416 of the first end 411 of the alignment tip 41 and the end surface 426 of the alignment bar 42, an error in length of the assembled nozzle can be corrected. Thus, precision positioning of the nozzles can be achieved.

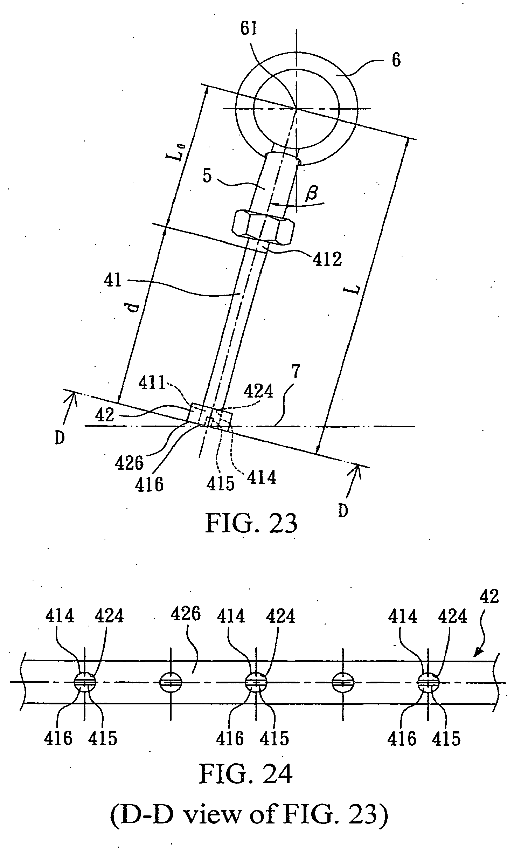

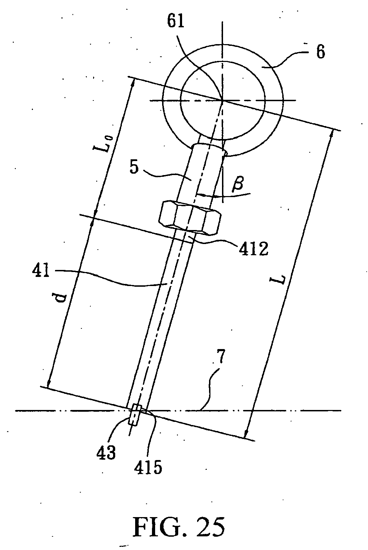

Referring to FIGS. 23-25, the difference between this embodiment and the first embodiment lies in that in this embodiment, the auxiliary device for precision positioning of welded type nozzles can further include an alignment plate 43. Parts that are the same as those in the first embodiment are denoted by the same reference numerals, and will not again be described in detail.

First, the circular holes 424 of the alignment bar 42 are sleeved over the circular shafts 414 of the first ends 411 of two alignment tips 41 (or three alignment tips 41), and through the cooperation of the circular holes 424 and the circular shafts 414, an error in nozzle pitch E, an error in parallelism of nozzles and an angle error in included angle β between the center line of the nozzle and a normal line N of the working piece surface 7 are corrected. The end surface 426 of the alignment bar 42 is parallel to and aligned with the end surfaces 416 of the first ends 411 of the two alignment tips 41, thereby correcting error in length of the assembled nozzle.

Next, the alignment bar 42 and the at least two alignment tips 41 are fixed, and then the alignment plate 43 is disposed in the key slots 415 of the first ends 411 of the alignment tips 41, so that the key slots 415 of the first ends 411 of the alignment tips 41 are parallel to the alignment plate 43, thereby correcting the offset angle of the nozzle. After all the alignment tips 41 are corrected, the welding adapters 5 and the main pipe header 6 are connected by welding.

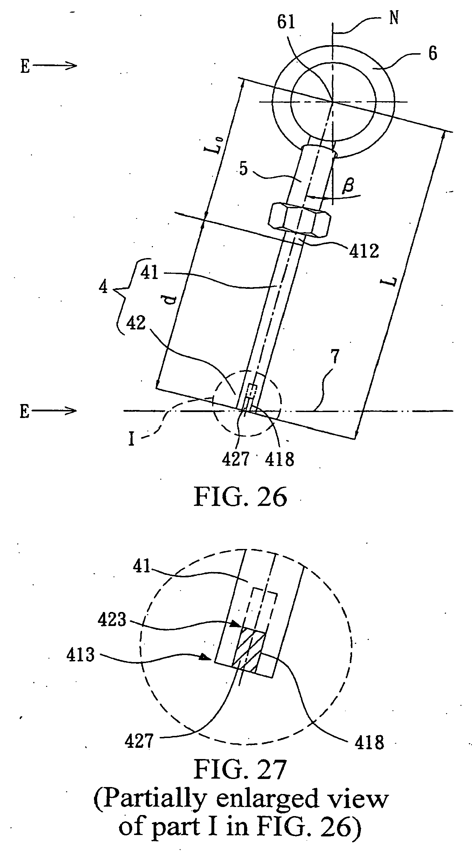

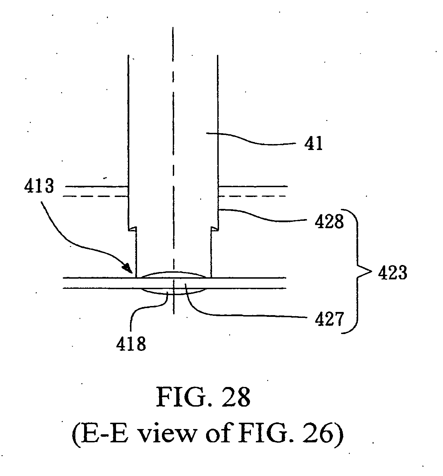

Referring to FIGS. 26-28, the difference between this embodiment and the embodiment of FIGS. 9-12 lies in that in this embodiment, the first positioning portions 413 have slots 418, and the second positioning portions 423 have keys 427 and slots 428. Parts that are the same as those in the embodiments of FIGS. 9-12 are denoted by the same reference numerals, and will not be described in further detail.

The key 427 of the second positioning portion 423 of the alignment bar 42 is inserted into the slot 418 of the first positioning portion 413 of the alignment tip 41, and the slot 428 of the second positioning portion 423 of the alignment bar 42 is bilaterally sleeved into an outer edge of the alignment tip 41. Through the cooperation of the key 427 and the slot 428 of the second positioning portion 423 with the slot 418 of the first positioning portion 413 and the outer edge of the alignment tip 41, the error in nozzle pitch E, the error in parallelism of nozzles, the angle error in included angle β between the center line of the nozzle and the normal line N of the working piece surface 7, and the error in length of the assembled nozzle can be corrected at the same time.

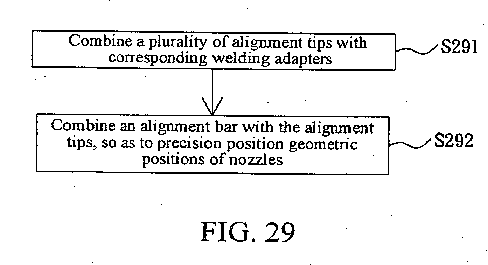

FIG. 29 is a flowchart of a method for precision positioning of welded type nozzles according to the present invention. In this embodiment, the auxiliary device 4 for precision positioning of welded type nozzles of the first embodiment shown in FIGS. 9-12 is described. In Step S291, a plurality of alignment tips 41 are combined with each welding adapter 5, where each alignment tip 41 has a first end 411 and a second end 412 opposite to each other, each first end 411 is away from the corresponding welding adapter 5 and has a first positioning portion 413, and each second end 412 is fixed to the corresponding welding adapter 5.

In this embodiment, the second end 412 of the alignment tip 41 has the same external dimension as the nozzle tips of the nozzles to be positioned. After the first positioning structure 417 (the positioning flat surface as shown in FIG. 16 or the positioning key as shown in FIG. 17) of the second end 412 of each alignment tip 41 is disposed in the corresponding welding adapter 5 to cooperate with the second positioning structure on the inner surface of the welding adapter 5, the alignment tips 41 are locked by using a nut 8.

In Step S292, an alignment bar 42 is combined with the alignment tips 41, so that the first positioning portions 413 of the alignment tips 41 are aligned with the second positioning portions 423 of the alignment bar 42, so as to position geometric positions of the nozzles.

For the mode of positioning the geometric positions of the nozzles (including the error in nozzle pitch E, the error in parallelism of nozzle, the angle error in included angle β between the center line of the nozzle and the normal line N of the working piece surface 7, and the error in length of the assembled nozzle) by using the first positioning portions 413 of the alignment tips 41 and the second positioning portions 423 of the alignment bar 42, reference can be made to the description of the first embodiment of nozzle positioning by using the auxiliary device for precision positioning of welded type nozzles during welding, and the details will not be described herein again.

By using the method and auxiliary device 4 for precision positioning of welded type nozzles according to the present invention, the alignment tip 41 and the alignment bar 42 can be applied in cooperation during the process of welding the welding adapters 5 of the nozzles and the main pipe header 6, so that the geometric positions of the nozzles, for example, an error in nozzle pitch E, an error in parallelism of nozzles and an angle error in included angle β between the center line of the nozzle and the normal line N of the working piece surface 7, can be accurately corrected. In addition, the correction position is close to the impact area of the spray pattern on the working piece surface 7, so that the extensible error generated by the conventional method can be reduced or avoided, thereby greatly improving the accuracy of the geometric position of the impact area of spray pattern.

While several embodiments of the present invention have been illustrated and described, various modifications and improvements can be made by those skilled in the art. The embodiments of the present invention are therefore described in an illustrative but not in a restrictive sense. It is intended that the present invention should not be limited to the particular forms as illustrated and that all modifications which maintain the scope of the present invention are within the scope defined in the appended claims.

## Claims

1. A method for precision positioning of welded type nozzles in a main pipe header (6), wherein each nozzle has a welding adapter (5) and a nozzle tip, the method comprising:
(a) combining a plurality of alignment tips (41) with corresponding welding adapters (5), wherein each alignment tip (41) has a first end (411) and a second end (412) opposite to each other, each first end (411) is away from the corresponding welding adapter (5) and has a first positioning portion (413), and each second end (412) is fixed to the corresponding welding adapter (5); and
(b) combining an alignment bar (42) with the alignment tips (41), so that the first positioning portions (413) of the alignment tips (41) are aligned with a plurality of second positioning portions (423) of the alignment bar (42), so as to precision position geometric positions of the nozzles, wherein structures of the second positioning portions (423) cooperate with structures of the first positioning portions (413) of the alignment tips (41), and after the alignment bar (42) is combined with the alignment tips (41), a correction distance (L) between an end surface (426) of the alignment bar (42) and a center line (61) of the main pipe header (6) in a longitudinal direction is larger than a length (L₀) of an assembled nozzle after a nozzle tip is combined with the corresponding welding adapter (5), and the length (L₀) of the assembled nozzle is a distance between the nozzle tip and the center line (61) of the main pipe header (6) in the longitudinal direction.

2. The method according to claim 2, wherein in step (a), the second end (412) of the alignment tip (41) has the same external dimension as the nozzle tip.

3. The method according to claim 1 or 2, wherein in step (b), the correction distance is L, the length of the assembled nozzle is L₀, a spray distance between the nozzle and a working piece surface is d, and a relation between L, L₀ and d is that:
when d≤200 mm, L₀<L<L₀+500 mm; and
when d>200 mm, L₀<L<L₀+3d.

4. The method according to any of the preceding claims, wherein the first positioning portion (413) of the alignment tip (41) and the second positioning portion (423) of the alignment bar (42) are a slot and key combination.

5. The method according to any of the preceding claims, further comprising:
locking the plurality of alignment tips (41) by using nuts (8).

6. A method for connecting a plurality of welded type nozzles with a main pipe header (6), wherein each nozzle has a welding adapter (5) and a nozzle tip, comprising:
precision positioning the plurality of welded type nozzles in the main pipe header (6) using the method as claimed in any of the preceding claims; and
connecting the plurality of welded type nozzles with the main pipe header (6) using welding.

## Patentansprüche

1. Verfahren zur präzisen Positionierung von Schweißdüsen in einem Hauptrohrkopf (6), wobei jede Düse einen Schweißadapter (5) und eine Düsenspitze aufweist, welches Verfahren umfasst:
(a) Zusammensetzen einer Mehrzahl von Ausrichtungsspitzen (41) mit entsprechenden Schweißadaptern (5), wobei jede Ausrichtungsspitze (41) ein erstes Ende (411) und ein zweites Ende (412) aufweist, die einander gegenüberliegend vorgesehen sind, wobei jedes erste Ende (411) entfernt zu dem entsprechenden Schweißadapter (5) ist und einen ersten Positionierungsabschnitt (413) aufweist und wobei jedes zweite Ende (412) an dem entsprechenden Schweißadapter (5) befestigt ist; und
(b) Zusammensetzen einer Ausrichtungsstange (42) mit den Ausrichtungsspitzen (41), so dass die ersten Positionierungsabschnitte (413) der Ausrichtungsspitzen (41) mit einer Mehrzahl von zweiten Positionierungsabschnitten (423) von der Ausrichtungsstange ausgerichtet sind, (42), um die geometrischen Positionen der Düsen präzise zu positionieren, wobei Strukturen der zweiten Positionierungsabschnitte (423) mit Strukturen der ersten Positionierungsabschnitte (413) der Ausrichtungsspitzen (41) zusammenwirken und wobei nach dem Zusammensetzen der Ausrichtungsstange (42) mit den Ausrichtungsspitzen (41) ein Korrekturabstand (L) zwischen einer Stirnfläche (426) der Ausrichtungsstange (42) und einer Mittellinie (61) des Hauptrohrkopfs (6) in einer Längsrichtung größer als eine Länge (L₀) einer zusammengesetzten Düse ist, nachdem eine Düsenspitze mit dem entsprechenden Schweißadapter (5) zusammengesetzt wurde, und wobei die Länge (L₀) der zusammengesetzten Düse kombiniert ein Abstand zwischen der Düsenspitze und der Mittellinie (61) des Hauptrohrkopfs (6) in der Längsrichtung ist.

2. Verfahren nach Anspruch 2, wobei in dem Schritt (a) das zweite Ende (412) der Ausrichtungsspitze (41) die gleiche Außenabmessung hat wie die Düsenspitze.

3. Verfahren gemäß einem Anspruch 1 oder 2, wobei in dem Schritt (b) der Korrekturabstand L ist, die Länge der zusammengesetzten Düse L₀ ist, ein Sprühabstand zwischen der Düse und der Oberfläche eines Werkstücks d ist und die Beziehung zwischen L, L₀ und d wie folgt lautet:
wenn d≤200 mm, L₀ <L <L₀ + 500 mm; und
wenn d> 200 mm, L₀ <L <L₀ + 3d.

4. Verfahren nach einem der vorhergehenden Ansprüche, wobei der erste Positionierungsabschnitt (413) der Ausrichtungsspitze (41) und der zweite Positionierungsabschnitt (423) der Ausrichtungsstange (42) eine Nut-Feder-Kombination sind.

5. Verfahren nach einem der vorhergehenden Ansprüche, weiterhin umfassend:
Blockieren der Mehrzahl von Ausrichtungsspitzen (41) unter Verwendung von Muttern (8).

6. Verfahren zum Verbinden einer Mehrzahl von Schweißdüsen mit einem Hauptrohrkopf (6), wobei jede Düse einen Schweißadapter (5) und eine Düsenspitze aufweist, umfassend:
ein präzises Positionieren der Mehrzahl von Schweißdüsen in dem Hauptrohrkopf (6) unter Verwendung des Verfahrens nach einem der vorhergehenden Ansprüche; und
Verbinden der Mehrzahl von Schweißdüsen mit dem Hauptrohrkopf (6) durch Schweißen.

## Revendications

1. Un procédé de positionnement de précision de buses de type soudé dans une tête de tube principale (6), dans lequel chaque buse présente un adaptateur de soudage (5) et un embout de buse, le procédé comprenant :
(a) la combinaison d'une pluralité d'embouts d'alignement (41) avec des adaptateurs de soudage correspondants (5), dans laquelle chaque d'embout d'alignement (41) comporte une première extrémité (411) et une seconde extrémité (412) opposées l'une à l'autre, chaque première extrémité (411) étant à une distance de l'adaptateur de soudage correspondant (5) et ayant une première partie de positionnement (413), et chaque seconde extrémité (412) étant fixée à l'adaptateur de soudage correspondant (5); et
(b) la combinaison d'une barre d'alignement (42) avec les embouts d'alignement (41), de sorte que les premières parties de positionnement (413) des embouts d'alignement (41) se trouvent alignées avec une pluralité de secondes parties de positionnement (423) de la barre d'alignement (42), de manière à positionner précisément les positions géométriques des buses, dans lequel les structures des secondes parties de positionnement (423) coopèrent avec les structures des première parties de positionnement (413) des embouts d'alignement (41), et après que la barre d'alignement (42) ait été combinée avec les embouts d'alignement (41), une distance de correction (L) entre une surface d'extrémité (426) de la barre d'alignement (42) et un axe central (61) de la tête de tube principale (6) suivant une direction longitudinale est supérieure à une longueur (L₀) d'une buse assemblée après q'une embout de buse est combiné à l'adaptateur de soudage correspondant (5), et la longueur (L₀) de la buse assemblée est une distance entre l'embout de buse et l'axe central (61) de la tête de tuyau principale (6) suivant une direction longitudinale.

2. Le procédé selon la revendication 2, dans lequel, dans l'étape (a), la seconde extrémité (412) de l'embout d'alignement (41) présente la même dimension externe que l'embout de buse.

3. Le procédé selon la revendication 1 or 2, dans lequel, dans l'étape (b), la distance de correction est L, la longueur de la buse assemblée est L₀, une distance de pulvérisation entre la buse et une surface de travail de la pièce est d, et une relation entre L, L₀ et d est la suivante :
lorsque d≤200 mm, L₀ <L < L₀ + 500 mm; et
lorsque d > 200 mm, L₀ <L < L₀ + 3D.

4. Le procédé selon l'une quelconque des revendications précédentes, dans lequel la première partie de positionnement (413) de l'embout d'alignement (41) et la seconde partie de positionnement (423) de la barre d'alignement (42) sont une combinaison de touche et fente.

5. Le procédé selon l'une quelconque des revendications précédentes, comprenant en outre :
le verrouillage de la pluralité des embouts d'alignement (41) au moyen d'écrous (8).

6. Un procédé de connexion d'une pluralité de buses de type soudées à une tête de tube principale (6), dans lequel chaque buse présente un adaptateur de soudage (5) et un embout de buse, comprenant :
le positionnement de précision de la pluralité de buses de type soudé sur la tête de tube principale (6) en utilisant la méthode de l'une quelconque des revendications précédentes ; et
la connexion de la pluralité de buses de type soudées à la tête de tube principale (6) par soudage.
